# EUROPÄISCHE PATENTSCHRIFT

(11) **EP 3 292 602 B1**
(45) Veröffentlichungstag und Bekanntmachung des Hinweises auf die Patenterteilung: **03.08.2022**
(21) Anmeldenummer: 16721158.0
(22) Anmeldetag: 06.05.2016
(51) Int. Cl.: H02G 3/06, H02G 3/08, F16L 5/02, F16L 5/06

(54) **KABEL-/LEITUNGSEINFÜHRUNG**
CABLE/LINE INSERTION
PASSAGE DE CÂBLE/LIGNE

(30) Priorität: 06.05.2015 DE 102015208398
(43) Veröffentlichungstag der Anmeldung: 14.03.2018
(73) Patentinhaber: Eaton Protection Systems IP GmbH & Co. KG, 12529 Schönefeld (DE)
(72) Erfinder: SAUER, Dieter, 69434 Heddesbach (DE); NAUMANN, Reiner, 68239 Mannheim (DE)
(74) Vertreter: Novagraaf Group
(86) Internationale Anmeldenummer: PCT/EP2016/060149
(87) Internationale Veröffentlichungsnummer: WO 2016/177864

(56) Entgegenhaltungen:
- EP-A2- 2 096 728
- EP-A2- 2 456 030
- EP-A2- 2 858 190
- DE-A1- 3 731 149
- DE-U1-202004 005 457
- DE-U1-202004 008 388
- DE-U1-202014 007 497
- US-A- 2 365 785
- US-A1- 2011 155 457

## Beschreibung

Die Erfindung betrifft eine Kabel-/Leitungseinführung, auch -durchführung genannt, die zum Ein- und Durchführen wenigstens einer Leitung bzw. eines Kabels in und durch eine Wandöffnung in einer Gehäusewand dient. Eine solche Kabel-/Leitungseinführung ist ein separat anbringbares Teil und wird je nach Bedarf in einer bereits vorhandenen oder hergestellten Wandöffnung der Gehäusewand montiert. Die Gehäusewand ist bspw. eine Wand eines Klemmkastens, einer Steckdosenverteilung, einer Steckvorrichtung, eines Leuchtegehäuses, eines Steuergeräts oder eines anderen elektrischen Betriebsmittels. Je nach Anforderung, können die Kabel-/Leitungseinführungen auch explosionsgeschützt ausgeführt sein.

Bei einer aus der Praxis bekannten Kabel-/Leitungseinführung weist diese eine Einführhülse zum Einstecken in die Wandöffnung, einen von dieser zumindest stellenweise im Wesentlichen radial nach außen abstehenden Anpressflansch, ein in Richtung Anpressflansch auf die Einführhülse insbesondere aufschraubbares Klemmteil und einen gegenüberliegend zum Klemmteil angeordneten Befestigungsabschnitt der Einführhülse auf. Der Befestigungsabschnitt dient zur Befestigung an der entsprechenden Gehäusewand und weist bei der vorbekannten Einführung ein Gewinde auf, das mit einem entsprechenden Gewinde innerhalb der Wandöffnung verschraubt wird. Auf diese Weise wird die Kabel-/ Leitungseinführung in der Wandöffnung der Gehäusewand festgelegt. Die Kabel bzw. Leitungen werden dann durch die Einführhülse durchgeführt und mittels des Klemmteils in der Einführhülse oder relativ zur Einführhülse befestigt, um bspw. auch eine entsprechende Zugentlastung zu bilden.

Aus EP 2 858 190 A2 ist eine Vorrichtung zur Befestigung einer Leitung mit einem Grundkörper, einer Hutmutter, einer Klemmeinrichtung bekannt, wobei die Klemmeinrichtung dem Grundkörper zugeordnet ist und im Betriebszustand von der Hutmutter übergriffen ist, wobei die Hutmutter mit dem Grundkörper eine lösbare Verbindung ausbildet und dabei auf die Klemmeinrichtung derart einwirkt, dass die elektrische Leitung gehalten ist und wobei der Grundkörper mindestens eine zur Längsachse der elektrischen Leitung abgewinkelte, insbesondere radiale, Druckausgleichsöffnung aufweist, die mit einem Filter verschlossen ist, die sich dadurch kostengünstig herstellen lässt, dass der Filter die Druckausgleichsöffnung an der Innenoberfläche des Grundkörpers verschließt und mit dieser in Kontakt ist.

Aus DE 37 31 149 A1 ist eine Zugentlastung für in elektrische Geräte einführbare elektrische Anschlussschnüre bekannt. Die Aufgabe der dort offenbarten Zugentlastung ist es, ohne Änderung der die Anschlussschnur aufnehmenden Geräteöffnung die Zugentlastung so zu gestalten, dass Anschlussschnüre unterschiedlichen Durchmessers innerhalb der Geräteöffnung fixierbar sind. Diese Aufgabe wird dadurch gelöst, dass die Anschlussschnur in ihrem Einführungsbereich ein ihre äußeren Abmessungen überragendes Abschlussteil besitzt, das von einem in die Geräteöffnung einführbaren und fixierbaren Adapter formschlüssig umgriffen ist.

Aus US 2011/0155457 A1 ist eine Klemmenstützvorrichtung bekannt, die einen Hauptkörper, eine Buchse, ein Vorspannelement, einen Stopper und ein Verriegelungselement aufweist. Das Verriegelungselement umfasst einen Verriegelungskörper, der zwischen einer Verriegelungsposition, die sich zwischen der Buchse und dem Stopper befindet, und einer Verriegelungsfreigabeposition, die von einer Position, die sich zwischen der Buchse und dem Stopper befindet, nach außen getrennt ist, beweglich angeordnet ist. Der Verriegelungskörper hat einen Passvorsprung, und der Stopper hat eine Passvertiefung, die mit dem Passvorsprung des Verriegelungskörpers in der Verriegelungsposition zusammenpasst.

Aus EP 2 096 728 A2 ist ein Leitungsverbinder bekannt der einen Kasteneingriffsbereich, der in eine Öffnung in einem Gehäuse eingreifen kann, und eine Feder, die konfiguriert ist zum Eingreifen in den Verbinder und das Gehäuse aufweist.

Aus EP 2 456 030 A2 ist eine Kabelverschraubung zur Durchführung eines Kabels durch eine Bohrung in einer Gehäusewand und Fixierung des Kabels in Bezug auf die Gehäusewand bekannt. Die Kabelverschraubung weist eine Klemmhülse mit einem Klemmabschnitt mit einer vorzugsweise zylindrischen Innenfläche, die einen Hülseninnendurchmesser zur Halterung des Kabels aufweist, und einem Flanschabschnitt, der größer als ein auf die Bohrung bezogener Nenndurchmesser ist, ein Klemmelement, welches ausgebildet ist, um solcherart mit der Klemmhülse verbunden zu werden, dass hierdurch der Hülseninnendurchmesser aus einer ersten Durchmesserabmessung zumindest über Abschnitte des Umfanges der Innenfläche in eine zweite Durchmesserabmessung gebracht wird, die kleiner ist als die erste Durchmesserabmessung, auf.

Aus DE 20 2004 008 388 U1 ist eine Verbindungsanordnung zum Festlegen eines Schlauches an einem Halter bekannt. Die Verbindungsanordnung weist ein erstes Buchsenteil und ein zweites Buchenteil, die beide aus Kunststoff bestehen und durch Verastungsmittel miteinander vebindbar sind, um sich zu einer Schlauch klemmend aufnehmenden Buchse zu ergänzen und einer aus Kunststoff bestehenden Klammer, die mit den beiden verbundenen Buchsenteilen in Eingriff bringbar ist, um die von ihnen gebildete Buchse in einem Loch des plattenförmig ausgebildeten Halters festzulegen.

Aus US 2 365 785 A ist eine Vorrichtung zur Positionierung eines Kabels oder einer Stange, das/die durch eine Platte oder eine Trennwand hindurchgeht, wobei die Bewegung des einen relativ zum anderen in einer Richtung in Längsrichtung des Kabels oder der Stange möglich ist,

Aus DE 20 2004 005457 U1 ist eine Kabelverschraubung aus Kunststoff für ein abgeschirmtes Kabel, mit einer axialen Bohrung, zur Durchführung des Kabels mit einem Gewindeflansch und einer Mutter zur Montage in einem elektrisch leifähigen Gehäuse bekannt.

Aus DE 20 2014 007 497 U1 ist eine Vorrichtung zur Durchführung eines Kabels durch eine Montageöffnung in einer Montagewand, insbesondere einer Gehäusewand eines elektrischen Geräts oder eines elektrischen Schranks, mit einem hohlzylinderförmigen Montagestutzen, - der einen der Durchführung des Kabels dienenden Stutzenkanal (50) umfasst, - der wenigstens ein erstes Aussengewinde aufweist, welches einen mit einem Innengewinde versehenen Montagering hält, und - der ein in die Montageöffnung einführbares Endstück aufweist, dadurch gekennzeichnet, dass das Endstück an der Aussenseite eine Ringnut aufweist, innerhalb der ein komprimierbarer Schnappring sitzt, der eine dem Montagering zugewandte Ankerfläche aufweist, die aus der Ringnut herausragt, wenn der Schnappring nicht komprimiert ist, so dass der an die Montageöffnung anschliessende Rand der Montagewand zwischen der Ankerfläche und dem Montagering einspannbar ist, bekannt.

Die vorbekannte Kabel-/Leitungseinführung muss durch eine Anzahl von Umdrehungen durch die entsprechenden Gewinde im Befestigungsabschnitt bzw. in der Wandöffnung befestigt werden. Die ist in der Regel zeitaufwendig und erfordert eine genaue Positionierung und Drehung der Einführhülse. Insbesondere bei engen räumlichen Verhältnissen kann ein solches Einsetzten der Kabel-/Leitungseinführung nur schwierig erfolgen.

Der Erfindung liegt daher die Aufgabe zugrunde, eine Kabel-/Leitungseinführung der eingangs genannten Art dahingehend zu verbessern, dass diese einfach auch bei engen räumlichen Verhältnissen einsetzbar und in schneller Weise in der Wandöffnung mit einfachen Mitteln befestigbar ist.

Diese Aufgabe wird durch die Merkmale des Patentanspruchs 1 gelöst.

Insbesondere zeichnet sich die Erfindung dadurch aus, dass der Befestigungsabschnitt eine zumindest stellenweise im Wesentlichen radial nach außen abstehende Anlagefläche aufweist, welche von einem Steckteil zum Anpressen des Anpressflansches an einen Öffnungsrand der Wandöffnung hintergreifbar ist. D.h., die entsprechende Anlagefläche weist in Richtung Anpressflansch und befindet sich auf der gegenüberliegenden Seite der Gehäusewand relativ zum Anpressflansch. Nach entsprechendem Einsetzen der Einführhülse in die Wandöffnung wird das Steckteil zwischen Gehäusewand und Anlagefläche eingesteckt und dies führt sowohl zu einer Fixierung der Einführhülse relativ zur Wandöffnung als auch zu einem Anpressen des Anpressflansches an den Öffnungsrand bzw. die Gehäusewand. D.h., es ist keine Drehung der Einführhülse relativ zur Gehäusewand notwendig, sondern nur eine im Wesentlichen gradlinige Bewegung zum Einsetzen und teilweisen Durchführen der Einführhülse in bzw. durch die Wandöffnung. Anschließend erfolgt die Fixierung mittels des Steckteils. Dies kann ohne zusätzliches Werkzeug einfach durch den Werker erfolgen.

Um gegebenenfalls keine spezielle Orientierung der Einführhülse zum Aufstecken des Steckteils zu benötigen, kann die Anlagefläche als vollständig in Umfangsrichtung des Befestigungsabschnitts umlaufender Anlageflansch ausgebildet sein. Dieser steht analog zur Anlagefläche ebenfalls im Wesentlichen radial vom Befestigungsabschnitt nach außen ab.

Zum verbesserten Einstecken und Führung des Steckteils kann es sich als günstig erweisen, wenn die Anlagefläche zumindest einen in Richtung Anpressflansch weisenden Rückhaltewandabschnitt aufweist, der sich beabstandet zur Außenseite des Befestigungsabschnitts erstreckt. D.h., das entsprechende Steckteil wird zwischen Außenseite des Befestigungsabschnitts und diesem Rückhaltewandabschnitt durchgeführt und wird durch Hintergreifen und Anlage mit der Anlagefläche die Einführhülse bei gleichzeitigem Andrücken des Anpressflansches fixieren.

Um das Steckteil beidseitig zum Befestigungsabschnitt besser führen zu können, kann es sich als vorteilhaft erweisen, wenn zwei Rückhaltewandabschnitte im Wesentlichen diametral gegenüberliegend von der Anlagefläche abstehen.

Die Führung des Steckteils kann dadurch weiter verbessert werden, wenn ggf. der Befestigungsabschnitt in seiner Außenseite gegenüberliegend zum jeweiligen Rückhaltewandabschnitt im Wesentlichen ebene Führungsflächen aufweist. Entlang dieser ebenen Führungsflächen wird das Steckteil geführt, ohne dass es durch eine entsprechende Krümmung des Befestigungsabschnitts in diesem Bereich ggf. nach außen aufgeweitet wird.

Zur verbesserten Zuführung des Steckteils beim Einstecken kann es sich weiterhin als günstig erweisen, wenn eine Länge der Führungsfläche größer als eine Länge des zugeordneten Rückhaltewandabschnitts ist.

Ein einfaches Ausführungsbeispiel für ein Steckteil kann darin gesehen werden, dass diese im Wesentlichen U-förmig ausgebildet ist, wobei jeder U-Schenkel zwischen Führungsfläche und Rückhaltewandabschnitt einschiebbar ist. Aufgrund der ebenen Führungsfläche, wobei die gegenüberliegenden Führungsflächen parallel zueinander ausgebildet sein können, können ebenfalls die U-Schenkel sich im Wesentlichen geradlinig erstrecken und so in einfacher Weise zwischen Führungsfläche und Rückhaltewandabschnitt eingeschoben werden.

Beim Einstecken des Steckteils soll in einfacher Weise das Andrücken des Anpressflansches erfolgen, wobei dies bspw. dadurch realisierbar ist, dass der U-Schenkel und/oder jeder Zwischenraum zwischen Anlagefläche und Anschlagflansch keilförmig ausgebildet ist. Durch diese Keilform ergibt sich beim Anbringen des Steckteils im Befestigungsabschnitt eine sich vergrößernde Andruckkraft im Bereich des Anpressflansches durch Anlage der entsprechenden keilförmigen Bereiche und durch Relativbewegung dieser keilförmigen Bereiche. Es besteht dabei ebenfalls die Möglichkeit, dass nur die U-Schenkel oder auch nur der entsprechende Zwischenraum mit dieser Keilform ausgebildet sind. Das jeweils andere Teil kann auch geradlinige und ebene Flächen zum Zusammenwirken mit den keilförmigen Flächen aufweisen.

Sind bspw. nur die U-Schenkel keilförmig ausgebildet, kann dies dadurch realisiert werden, dass die U-Schenkel des Steckteils sich keilförmig zumindest Abschnittsweise vom jeweiligen freien Ende des U-Schenkels in Richtung zum U-Steg in Längsrichtung der Einführhülse verbreitern. D.h., die entsprechende Dicke des U-Schenkels nimmt vom freien Ende in Richtung U-Steg zu.

Um ein maximale Einsteckposition des Steckteils zu bestimmen, kann der U-Steg eine im aufgesteckten Zustand vom Anschlagflansch fortweisende Anschlagleiste aufweisen. Diese kann bspw. in der maximalen Einsteckposition von Außen am Anlageflansch anliegen.

In vielen Fällen werden entsprechende Kabel-/Leitungseinführungen ebenfalls geerdet. Um erfindungsgemäß in einfacher Weise einen entsprechenden Anschluss zur Erdung zu ermöglichen, kann der U-Steg oder die Anschlagleiste mit einem Erdungskontaktanschluss ausgebildet sein. D.h., es sind keine zusätzlichen Maßnahmen oder Anschlüsse erforderlich, sondern eine entsprechende Erdungsverbindung wird direkt am Steckteil und am entsprechenden Erdungskontaktanschluss befestigt.

Zur verbesserten Abdichtung der Wandöffnung und auch im Hinblick auf einen möglichen Explosionsschutz ist es weiterhin als günstig zu betrachten, wenn der Anpressflansch zumindest eine in Richtung Öffnungsrand offene Dichtnut aufweist. In diese ist bspw. ein O-Ring als Dichtmittel einlegbar.

Um das Klemmteil in einfacher Weise an der Einführhülse zu befestigen, kann dieses als auf die Einführhülse insbesondere aufschraubbare Mutter ausgebildet sein.

Bei einem vorteilhaften Ausführungsbeispiel kann eine solche Mutter eine Hutmutter sein und in dieser eine insbesondere verformbare Leitungsdichthülse anordbar sein. Diese Leistungsdichthülse kann alternativ oder auch zusätzlich zu irisförmig angeordneten Klemmlamellen vorgesehen sein, wobei diese Klemmlamellen am Ende der Hülse ausgebildet sind, auf welche die entsprechende Mutter bzw. Hutmutter aufschraubbar ist. Die Leitungsdichthülse wird insbesondere in radialer Richtung nach innen verformt, um die durch die Leitungsdichthülse durchgeführten Kabel bzw. Leitungen zu fixieren und gleichzeitig eine Zugentlastung zu bilden.

Um in einfacher Weise die Leitungsdichthülse bei Aufschrauben der Hutmutter verformen zu können, ist es denkbar, dass die Leitungsdichthülse bei aufgeschraubter Hutmutter mit ihrem Innenende mit einer Stirnseite der Einführhülse in Anlage ist. Ein entsprechendes Außenende der Leitungsdichthülse ist von innen mit der Hutmutter in Anlage, sodass bei einem entsprechenden weiteren Aufschrauben der Hutmutter die Verformung der Leitungsdichthülse stattfindet.

Um gegebenenfalls die Einführhülse in ihrer Position durch ein Werkzeug oder dergleichen in einfacher Weise halten zu können und gegen Verdrehungen zu sichern, kann die Einführhülse einen radial und insbesondere einteilig mit dem Anpressflansch ausgebildeten Schraubflansch aufweisen. Auf diesen Schraubflansch ist von außen bspw. ein Schraubschlüssel aufsetzbar.

Es besteht ebenfalls die Möglichkeit, dass Anpressflansch und Schraubflansch beabstandet zueinander auf der entsprechenden Außenseite der Einführhülse ausgebildet sind.

Um in einfacher Weise sich gegenüber der Gehäusewand abstützen zu können, kann das Steckteil auf seiner dem Anpressflansch zuweisenden Seite eine Kontaktfläche zur Anlage an der Gehäusewand aufweisen. D.h., das beim Anbringen des Steckteils diese Kontaktfläche sich entlang der Gehäusewand bewegt und sich an dieser abstützt. Durch die entsprechende Keilform erfolgt dann bei weiterem Aufstecken des Steckteils eine entsprechende Zugbeaufschlagung der Einführhülse zum weiteren Andrücken des Anpressflansches an den Öffnungsrand bzw. die Gehäusewand.

Es sind verschiedene Sicherungsmaßnahmen denkbar, um das Steckteil in seiner entsprechend aufgesteckten Position zu halten. Solche Sicherungsmaßnahmen sind bspw. reibungserhöhende Profilierungen, Beschichtungen oder dergleichen direkt auf den in Kontakt stehenden Flächen von Gehäusewand, Steckteil und ggf. Anlagefläche. Andere Sicherungsmaßnahmen können durch Formschluss hergestellt werden. Eine solche Sicherungsmaßnahme kann bspw. darin gesehen werden, dass das Steckteil insbesondere in seinem U-Steg wenigstens eine Steckbohrung zum Einstecken eines Sicherungsstiftes aufweist, welche Steckbohrung bei aufgestecktem Steckteil mit einer Einsteckbohrung in der Gehäusewand bzw. am Öffnungsrand fluchtet. D.h., in dieser fluchtenden Stellung von Sicherungssteckbohrung und Einsteckbohrung wird der Sicherungsstift eingesetzt und das Steckteil in dieser Position gesichert.

Es wurde bereits darauf hingewiesen, dass die erfindungsgemäße Kabel-/Leitungseinführung insbesondere auch in explosionsgefährdeten Bereichen einsetzbar ist. Dazu ist die entsprechende Kabel-/Leitungseinführung eine Ex- insbesondere Ex-d-bzw. Ex-e-Kabel-/Leitungseinführung.

Weiterhin ist es erfindungsgemäß denkbar, dass das Steckteil nicht nur zur Sicherung einer Einführhülse sondern auch für zwei oder mehr Einführhülsen und damit entsprechend für zwei oder mehr Kabel-/Leitungseinführungen einsetzbar ist. Dies bedeutet, dass das eine Steckteil zwischen Anlagefläche und Gehäusewand bei dieser Mehrzahl von Kabel-/Leitungseinführen mit seinen U-Schenkeln einschiebbar ist. Dies bedeutet bspw., dass bei zwei nebeneinander angeordneten Kabel-/Leitungseinführung das Steckteil vier entsprechende Schenkel aufweist, die bspw. paarweise in entsprechendem Abstand angeordnet sind, um auf den Befestigungsabschnitt der jeweiligen Kabel-/Leitungseinführung aufgeschoben zu werden. Allerdings ist dabei der Abstand der Kabel-/Leitungseinführung durch die Anordnung der entsprechenden Schenkel festgelegt.

In gewissen Fällen ist es notwendig, die Kabel-/Leitungseinführung zu ersetzen, weil diese beispielsweise beschädigt ist. Um dabei zu verhindern, dass beispielsweise die Leitungen von der entsprechenden elektronischen oder elektrischen Vorrichtung getrennt werden müssen, um eine neue Kabel-/Leitungseinführung anzuordnen, können Klemmteil, Einführhülse, und Leitungsdichthülse aus wenigstens zwei im Wesentlichen in Axialrichtung der Kabel-/Leitungseinführung geteilten Einzelelementen zusammensetzbar sein. Dass heißt, die entsprechenden Einzelelemente bilden Halbschalen, die entlang entsprechender Trennkanten zu deren positionsgenauem Zusammensetzen Führungs-/Positioniermittel aufweisen. Diese dienen sowohl zum Positionieren als auch Zusammensetzen der Einzelelemente. Dadurch besteht die Möglichkeit, ohne Lösen entsprechender Kabel oder Leitungen eine Kabel-/Leitungseinführung durch eine Neue zu ersetzen, indem die entsprechenden Einzelelemente auf Kabel oder Leitung aufgesetzt und miteinander verbunden werden.

Im Hinblick auf das Steckteil ist eine solche Zweiteiligkeit in der Regel nicht notwendig, da dieses bereits im Wesentlichen U-förmig ausgebildet ist.

Um die Kabel-/Leitungseinführung auch für explosionsgefährdete Bereiche einsetzen zu können, sind die Führungs- und/oder Positioniermittel als miteinander verrastende Führungs- und/oder Positioniermittel ausgebildet, und weisen insbesondere Rasthaken und/oder Raststifte und/oder Rastzungen oder dergleichen auf, die mit entsprechenden Gegenelementen in Form von Einrast- und/oder Einstecköffnungen in Eingriff bringbar sind. Ein Lösen dieser miteinander verrastenden Führungs- und/oder Postioniermittel ist nur unter Verwendung eines entsprechenden Spezialwerkzeugs möglich.

Weiterhin kann zumindest im Bereich der Einführhülse eine Dichtungsstruktur angeordnet sein, die eine entsprechende Leitung zusätzlich zur Leitungsdichthülse gegenüber einer äußeren Atmosphäre abdichtet. Diese Dichtungsstruktur erstreckt sich insbesondere entlang der entsprechenden Trennkanten der einzelnen Elemente der Einführhülse.

Dadurch ergibt sich als weiterer Vorteil vorliegender Erfindung eine Kabel-/Leitungseinführung für den Einsatz in explosionsgefährdeten Bereichen, die eine entsprechende Schutzart realisiert und auch Explosionsschutzbedingungen wie Ex-i oder Ex-e erfüllt und weiterhin ein Ersetzen einer Kabel-/Leitungseinführung auch ohne Abschalten der entsprechenden elektrischen oder elektronischen Vorrichtung ermöglicht.

Im Folgenden werden vorteilhafte Ausführungsbeispiele der Erfindung anhand der in der Zeichnung beigefügten Figuren näher erläutert.

Es zeigen:
- Fig. 1: eine perspektivische Seitenansicht eines ersten Ausführungsbeispiels einer erfindungsgemäßen Kabel-/Leitungseinführung;
- Fig. 2: eine Vorderansicht der Kabel-/Leitungseinführung nach Figur 1;
- Fig. 3: einen Längsschnitt durch die Kabel-/Leitungseinführung nach Figur 1 entlang der Linie III-III aus Figur 2;
- Fig. 4: eine auseinandergezogene Darstellung in Seitenansicht der Kabel-/Leitungseinführung nach Figur 1;
- Fig. 5: eine perspektivische und auseinandergezogene Darstellung der Kabel-/Leitungseinführung nach Figur 4 mit einer Alternative eines Steckteils;
- Fig. 6: eine Seitenansicht eines zweiten Ausführungsbeispiels einer erfindungsgemäßen Kabel-/Leitungseinführung analog zu Figur 4, und
- Fig. 7: eine perspektivische und auseinandergezogene Darstellung der Kabel-/Leitungseinführung nach Figur 6.

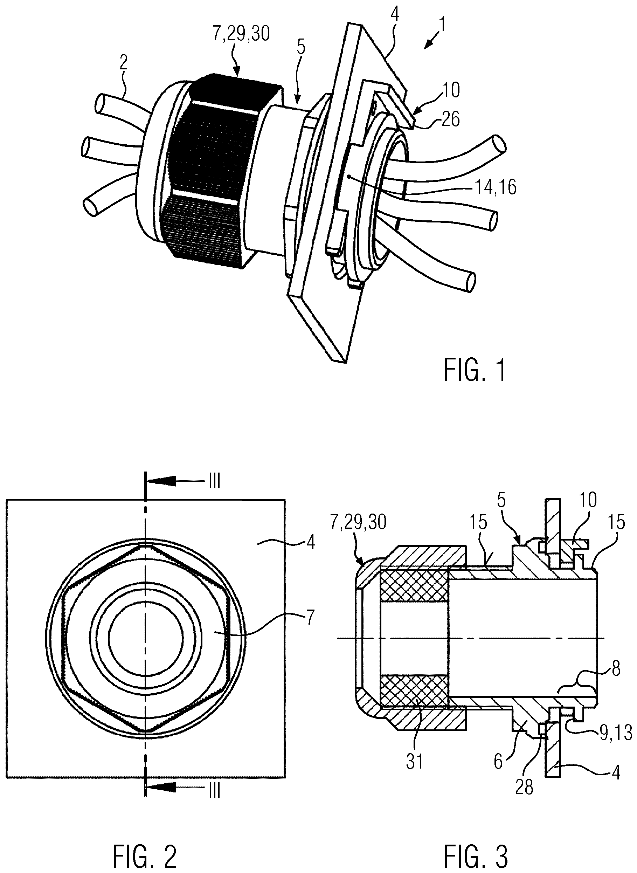

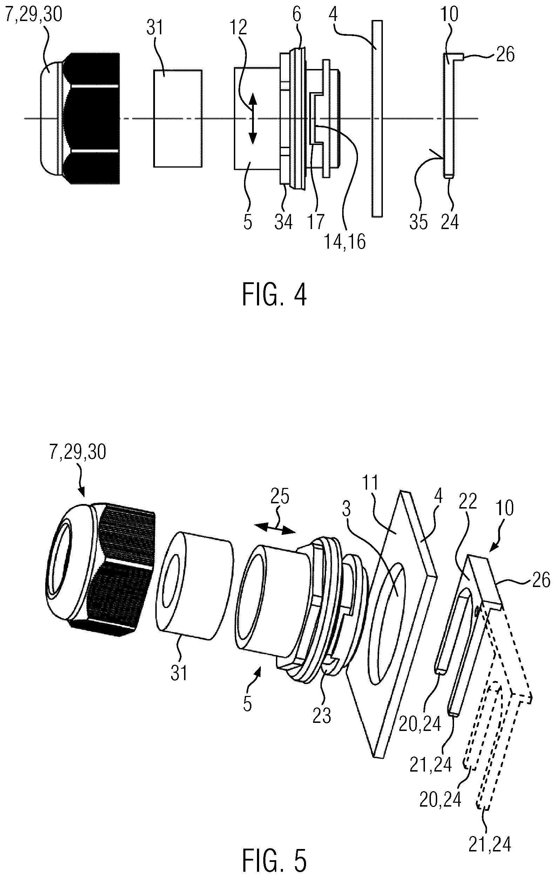

Figur 1 zeigt eine perspektivische Seitenansicht eines ersten Ausführungsbeispiels einer erfindungsgemäßen Kabel-/Leitungseinführung 1. Diese weist eine Anzahl von Elementen auf, wie bspw. ein Klemmteil 7 in Form einer Mutter 29 und insbesondere Hutmutter 30 sowie eine Einführhülse 5. Auf die Einführhülse ist an einem Ende die Hutmutter 30 aufschraubbar. Zwischen dieser und der Einführhülse 5 ist eine verformbare Leitungsdichthülse 31 angeordnet. Diese wird bei entsprechendem Aufschrauben der Hutmutter 30 auf die Einführhülse 5 komprimiert und elastisch insbesondere in radialer Richtung nach innen verformt. Dadurch werden entsprechende Kabel oder Leitungen 2 verklemmt und fixiert, wobei gleichzeitig eine Zugentlastung gebildet ist. An einem dem Klemmteil 7 gegenüberliegenden Ende der Einführhülse 5 ist ein Befestigungsabschnitt 8, s. auch Figuren 3 und 4 gebildet. Dieser wird durch die eine entsprechende Wandöffnung 3 einer Gehäusewand 4 durchgesteckt und im Gehäuseinneren mittels eines Steckteils 10 fixiert. Durch das Fixieren mittels des Steckteils 10 erfolgt gleichzeitig ein Andrücken eines Anpressflansches 6 an die Gehäusewand 4 bzw. den Öffnungsrand 11. Dieser steht radial nach außen von der Einführhülse 5 ab, s. entsprechend Figuren 3 und 4, und verläuft in Umfangsrichtung 12 von Einführhülse 5 bzw. Befestigungsabschnitt 8. Direkt neben dem Anpressflansch und einteilig mit diesem ausgebildet ist ein Schraubflansch 34 angeordnet.

Auf seiner der Gehäusewand 4 zuweisenden Seite weist der Anpressflansch 6 eine offenen Dichtnut 28 auf, s. Figur 3, in die bspw. ein O-Ring als Dichtmittel einlegbar ist (nicht dargestellt). In den Figuren 1 und 3 ist das Steckteil 10 bereits auf den Befestigungsabschnitt 8 aufgeschoben, wobei es zwischen einer entsprechenden Innenseite der Gehäusewand 4 und einer Anlagefläche 9 als Teil eines Anlageflansches 13 angeordnet ist. Die Anlagefläche 9 bzw. der Anlageflansch 13 steht radial nach außen vom Befestigungsabschnitt 8 ab und ist bei in der Wandöffnung 3 eingesteckter Einführhülse 5 beabstandet zur Innenseite der Gehäusewand 4 angeordnet. In den entsprechenden Zwischenraum zwischen Anlagefläche 9 und Gehäusewand 4 ist das Steckteil 10 einschiebbar.

Zumindest an zwei diametral gegenüberliegenden Stellen des Anlageflansches 13 weist dieser in Richtung zum Anpressflansch 6 weisende Rückhaltewandabschnitte 14 bzw. 16 auf. In Figur 1 ist der Rückhaltewandabschnitt 14 sichtbar, wobei der weitere Rückhaltewandabschnitt 16 diametral zu diesem relativ zum Befestigungsabschnitt 8 angeordnet ist. Die entsprechenden Rückhaltewandabschnitte 14 sind beabstandet zur Außenseite 15, s. auch Figur 3, der Einfuhrhülse 5 bzw. des entsprechenden Befestigungsabschnitts 8 angeordnet. Durch diese Beabstandung ist ein Zwischenraum 23 gebildet, siehe auch Figur 5. In diesem Zwischenraum ist das Steckteil 10 angeordnet, wobei dieses insbesondere eine U-Form, s. auch Figur 5 mit zwei U-Schenkeln 20, 21 und einem diese verbindenden U-Steg 22 aufweist.

Nach Figuren 1 und 3 ist der U-Steg 22 zumindest teilweise in den Zwischenraum zwischen Anlagefläche 9 und Gehäusewand 4 eingeschoben.

In Figur 2 ist eine Vorderansicht der Kabel-/Leitungseinführung 1 von Seiten des Klemmteils 7 bzw. der Hutmutter 30 her dargestellt. Insbesondere die sechskantförmige Querschnittsform der Hutmutter 30 ist erkennbar.

Figur 3 entspricht einem Schnitt entlang der Linie III-III aus Figur 2. Zwischen der Hutmutter 30 und der Einführhülse 5 ist die Leitungsdichthülse 31 angeordnet, die im dargestellten Zustand noch nicht zum Verklemmen der entsprechenden Leitungen oder Kabel 2 radial nach innen verformt ist und mit ihrem Innenende 31 an einer Stirnseite 33 der Einführhülse anliegt. Bei weiterem Aufschrauben der Hutmutter 30 auf ein entsprechendes Außengewinde der Einführhülse 5 erfolgt eine Verformung dieser Leitungsdichthülse 31 mit Festlegung der Leitung bzw. Kabel und Realisierung einer Zugentlastung.

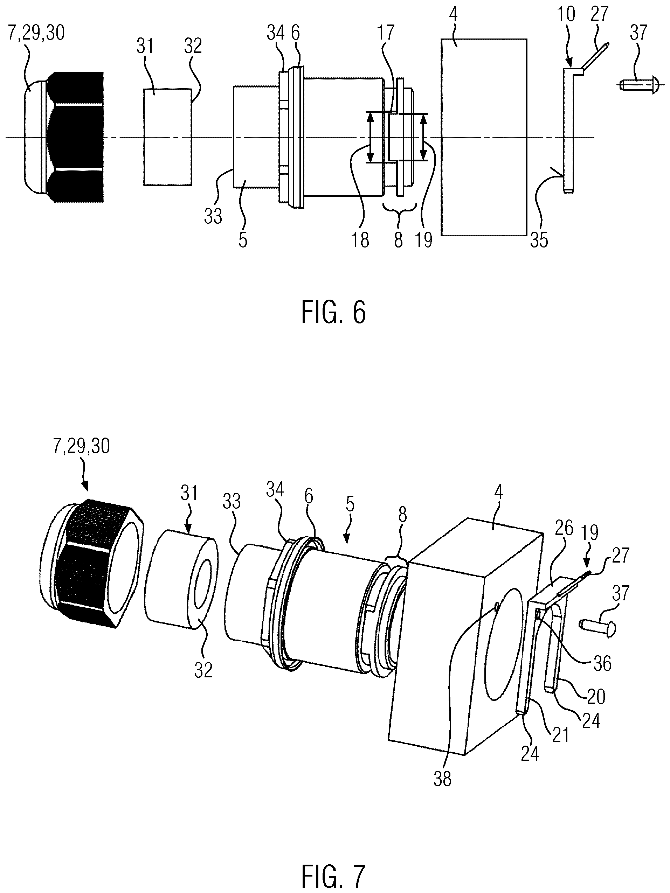

Die Einführhülse 5 weist in etwa mittig den Anpressflansch 6 mit Schraubflansch 34 auf, wobei auf der der Hutmutter 30 gegenüberliegenden Seite zu diesen der entsprechende Befestigungsabschnitt 8 ausgebildet ist. In Figur 3 ist noch ersichtlich, dass der Anpressflansch 6 einen teilweise in der Wandöffnung 3 angeordneten Stufenabschnitt aufweist, der bspw. zur Ausrichtung der Einführhülse 5 relativ zur Wandöffnung 3 dient. Auf der gegenüberliegenden Seite der Gehäusewand 4 liegt mit entsprechender Kontaktfläche 35, s. auch Figuren 4 und 6, das Steckteil 10 an, welches zwischen Gehäusewand 4 und Anlagefläche 9 bzw. Anlageflansch 13 eingeschoben ist.

Um bei entsprechendem Einschieben des Steckteils 10 in den Zwischenraum zwischen Gehäusewand 4 und Anlageflansch 13 ein Andrücken des Anpressflansches 6 in einfacher Weise zu ermöglichen, ist das Steckteil 10 keilförmig ausgebildet, sodass dessen Dicke vom freien Ende 24 der entsprechenden U-Schenkel 21, 22 her, s. auch Figur 5, in Richtung U-Steg 22 zunimmt.

Aufgrund entsprechender Passgenauigkeiten sowohl von Wandöffnung 3 als auch Kabel-/Leitungseinführung 1 kann diese Zunahme in der Dicke bzw. die Keilform sehr gering ausgebildet sein.

In Figur 4 ist eine auseinandergezogene Darstellung des ersten Ausführungsbeispiels der Kabel-/Leitungseinführung nach den vorangehenden Figuren dargestellt. Auf die vorangehende Beschreibung wird zusätzlich verwiesen.

In Figur 4 ist insbesondere erkennbar, dass im Befestigungsabschnitt 8 die Rückhaltewandabschnitte 14 bzw. 16 diametral gegenüberliegend vom Anlageflansch 13 in Richtung Anpressflansch 6, d.h., in Längsrichtung 25 des Befestigungsabschnitts 8 verlaufen. Die Rückhaltewandabschnitte 14, 16 enden beabstandet zum Anpressflansch 6 und sind ebenfalls beabstandet zur Außenseite 15 des Befestigungsabschnitts 8 angeordnet. Gegenüberliegend zu den Rückhaltewandabschnitten 14, 16 weist die entsprechende Außenseite 15 Führungsflächen 17 auf, die im Wesentlichen eben und parallel zueinander ebenfalls beidseitig und diametral gegenüberliegend zur Einführhülse 5 bzw. zum Befestigungsabschnitt 8 angeordnet sind. Jeweils eine Führungsfläche 17 ist einem entsprechenden Rückhaltewandabschnitt 14 bzw. 16 zugeordnet. Zwischen diesen ist der Zwischenraum 23 gebildet, s. auch Figur 5, in den die U-Schenkel 20, 21 des Steckteils 10 einschiebbar sind. Die Führungsflächen 17 weisen bei dem dargestellten Ausführungsbeispiel eine Länge 18 auf, die größer als eine entsprechende Länge 19 des zugeordneten Rückhaltewandabschnitts 14 bzw. 16 ist.

Ein Einsetzen des Steckteils 10 erfolgt zuerst mit freien Enden 24 der U-Schenkel 20, 21 in diesen Zwischenraum 23 und anschließend erfolgt ein Durchschieben der U-Schenkel durch diesen Zwischenraum bis, s. Figur 1, die freien Enden 24 aus dem Zwischenraum 23 herausgeschoben sind und frei liegen. Gleichzeitig bei diesem Einschieben des Steckteils 10 erfolgt ein Kontaktieren von Kontaktfläche 35 und Innenseite der Gehäusewand 4 sowie durch die entsprechende Keilform der U-Schenkel 20, 21 ein vermehrtes Andrücken des Anpressflansches 6 von der gegenüberliegenden Seite der Gehäusewand 4 her.

In Figur 5 ist eine Abwandlung des Steckteils 10 gestrichelt dargestellt. Bei diesem sind bspw. insgesamt vier U-Schenkel 20, 21 jeweils paarweise angeordnet. Jedes Paar der U-Schenkel 20, 21 wird einer separaten Kabel-/Leitungseinführung 1 zugeordnet, sodass mit dieser Alternative des Steckteils 10 gleichzeitig zwei in bestimmten Abstand nebeneinander angeordnete Einführhülsen 5 der Kabel-/Leitungseinführung 1 fixierbar sind.

Andere Ausführungsbeispiele für Steckteile 10 zum Anbringen von zwei oder mehr Einführhülsen 5 sind möglich, wie bspw. auch drei Paare von U-Schenkeln oder eine entsprechende Verlängerung der U-Schenkel zum Fixieren von zwei untereinander in der Gehäusewand angeordneten Kabel-/Leitungseinführungen.

Figuren 6 und 7 zeigen ein weiteres Ausführungsbeispiel einer Kabel-/Leitungseinführung 1, die insbesondere als Ex-d-Kabel-/Leitungseinführung ausgebildet ist, während die Kabel-/Leitungseinführung 1 nach den vorangehenden Figuren von der Schutzart Ex-e ist.

Das Ausführungsbeispiel aus Figuren 6 und 7 unterscheidet sich im Wesentlichen von dem vorangehenden Ausführungsbeispiel durch eine größere Länge des in der Wandöffnung 3 angeordneten Abschnitts der Einführhülse 5 und eine entsprechend größere Dicke der Gehäusewand 4. Im Übrigen entspricht der Aufbau des Ausführungsbeispiels nach Figuren 6 und 7 dem nach Figuren 1 bis 5.

Und auf die Beschreibung im Zusammenhang mit den Figuren wird verwiesen.

In Figuren 6 und 7 ist insbesondere noch dargestellt, dass die Länge 18 der Führungsfläche 17 größer als die Länge 19 des zugeordneten Rückhaltewandabschnitts 16 ist. Weiterhin weist das Steckteil 10 im Bereich des U-Stegs 22 eine in Längsrichtung 25 der Einführhülse 5 vorstehende Anschlagleiste 26 auf. Diese, s. auch Figur 3, begrenzt ein Einstecken des Steckteils 10 in den entsprechenden Zwischenraum 23. Das Steckteil 10 ist maximal bis zur Anlage dieser Anschlagleiste 26 an einen Außenumfang des Anlageflansches 13 einsteckbar.

Im Bereich der Anschlagleiste 26 ist in Figuren 6 und 7 außerdem ein Erdungskontaktanschluss 27 dargestellt, der direkt zur Erdung der Kabel-/Leitungseinführung 1 dient. Andere Anordnungsmöglichkeiten des Erdungskontaktanschlusses 27 sind möglich, bspw. auch in Verlängerung der U-Schenkel 20 bzw. 21 oder an anderer Stelle der Anschlagleiste 26 bzw. des U-Stegs 22. In einem Verbindungsbereich zwischen U-Schenkel 21 und U-Steg 22 ist eine Steckbohrung 36 angeordnet. Diese fluchtet bei aufgestecktem Steckteil 10 mit einer entsprechenden Einsteckbohrung 38 in der Gehäusewand 4 bzw. im Öffnungsrand 11. Durch sowohl Steckbohrung 36 als auch in Einsteckbohrung 38 ist in dieser Stellung ein Sicherungsstift 37 einsetzbar. Dieser fixiert Steckteil 10 in der aufgesteckten Stellung, in der der Anpressflansch 6 mit ausreichendem Druck an die Gehäusewand 4 angedrückt ist.

In Figur 7 ist weiterhin eine Teilungsebene 39 dargestellt, die sich im Wesentlichen in Axialrichtung der Kabel-/Leitungseinführung 1 erstreckt. Diese dient zur Kennzeichnung der Teilung der verschiedene Teile in Einzelelemente, siehe hierzu insbesondere Klemmteil 7, Leitungsdichthülse 31 und Einführhülse 5. Diese sind bei einem Ausführungsbeispiel der Erfindung in jeweils zwei Teilelemente aufgeteilt, die im Wesentlichen eine Halbschale bilden, so dass bei Zusammensetzen der beiden halbschaligen Einzelelemente die entsprechenden vollständigen Teile wieder gebildet sind. Dadurch besteht die Möglichkeit, auch bei weiterhin mit der entsprechenden elektrischen oder elektronischen Vorrichtung innerhalb des Gehäuses verbundenen Leitung eine Kabel-/Leitungseinführung durch eine andere zu ersetzen. Dazu werden von im Wesentlichen gegenüberliegenden Seiten der entsprechenden Leitung die Einzelelemente an diese herangeführt und miteinander mittels der entsprechenden Führungs- und/oder Positioniermittel verbunden. Diese Führungs- und/oder Positioniermittel dienen weiterhin zur genauen Ausrichtung, zum Verrasten und zur Verbindung der Einzelelemente. Ein Lösen des entsprechenden Rasteingriffs ist nur durch ein spezielles Werkzeug möglich, so dass diese Kabel-/Leitungseinführung auch eine entsprechende Schutzart erfüllt und in explosionsgefährdeten Bereichen einsetzbar ist. Die Führungs- und/oder Positioniermittel sind als miteinander verrastende Führungs- und/oder Positioniermittel ausgebildet und insbesondere weisen diese Rasthaken und/oder Raststifte und/oder Rastzungen oder dergleichen auf, die mit entsprechenden Gegenelementen in Form von Einrast- und/oder Einstecköffnungen in Eingriff bringbar sind. Diese Rastelemente bzw. Einsteckelemente sind entlang entsprechender Trennkanten der Einzelelemente angeordnet und dienen zum Positionieren, Ausrichten und Verbinden der Einzelelemente. Weiterhin kann entlang der Trennkanten zumindest der Einzelelemente der Einführhülse 5 eine Dichtstruktur angeordnet sein, die eine Abdichtung der entsprechenden Leitung bzw. des Kabels im Inneren der Einführhülse in Ergänzung zur Leitungsdichthülse gegenüber einer äußeren Atmosphäre gewährleistet.

Hinsichtlich des Steckteils 10 ist weiterhin zu beachten, dass dieses mit entsprechender Erdungsmöglichkeit ausgebildet sein kann. Beispiele einer entsprechenden Erdung sind c, w oder w/o. Insbesondere bei der Version nach w/o kann das Steckteil auch aus Kunststoff hergestellt sein. Eine entsprechende metallische Schicht zumindest stellenweise auf dem Steckteil ist in diesem Zusammenhang ausreichend, um eine Erdung zu ermöglichen.

Erfindungsgemäß ergibt sich eine Kabel-/Leitungseinführung 1, die in einfacher Weise in der entsprechenden Wandöffnung 3 mit zugehöriger Einführhülse 5 anordbar ist, wobei das Steckteil 10 schnell und sicher und ohne weitere Hilfsmittel anbringbar ist. Durch dieses Anbringen des Steckteils 10 erfolgt sowohl eine Sicherung der Einführhülse 5 innerhalb der Wandöffnung 3 als auch ein ausreichendes Andrücken des Anpressflansches 6 von außen an die Gehäusewand 4.

Wie bereits ausgeführt, kann die erfindungsgemäße Kabel-/Leitungseinführung auch mit entsprechender Zündschutzart, nämlich Ex-d oder Ex-e ausgebildet sein.

## Patentansprüche

1. Kabel-/Leitungseinführung (1) zum Ein- und Durchführen wenigstens einer Leitung (2) in und durch eine Wandöffnung (3) in einer Gehäusewand (4) mit einer Einführhülse (5) zum Einstecken in die Wandöffnung (3), einem von dieser zumindest stellenweise im Wesentlichen radial nach außen abstehenden Anpressflansch (6), einem in Richtung Anpressflansch (6) an einem ersten Ende der Einführhülse (5) auf diese insbesondere aufschraubbaren Klemmteil (7) und an einem dem Klemmteil (7) gegenüberliegenden Ende angeordneten Befestigungsabschnitt (8) der Einführhülse (5), wobei der Befestigungsabschnitt (8) eine zumindest stellenweise im Wesentlichen radial nach außen abstehende Anlagefläche (9) aufweist, **gekennzeichnet durch** ein Steckteil (10), wobei die Anlagefläche (9) durch radiales Einschieben des Steckteils (10) an einer Gehäusewandseite derart hintergreifbar ist, dass der Anpressflansch (6) an einen Öffnungsrand (11) der Wandöffnung (3) an einer Gehäusewandrückseite gepresst wird.

2. Kabel-/Leitungseinführung nach Anspruch 1, **dadurch gekennzeichnet, dass** die Anlagefläche (9) als vollständig in Umfangsrichtung (12) des Befestigungsabschnitts (8) umlaufender Anlageflansch (13) ausgebildet ist.

3. Kabel-/Leitungseinführung nach Anspruch 1 oder 2, **dadurch gekennzeichnet, dass** die Anlagefläche (9) zumindest einen in Richtung Anpressflansch (6) weisenden Rückhaltewandabschnitt (14) aufweist, der sich beabstandet zur Außenseite (15) des Befestigungsabschnitts erstreckt.

4. Kabel-/Leitungseinführung nach Anspruch 3, **dadurch gekennzeichnet, dass** zwei Rückhaltewandabschnitte (16) im Wesentlichen diametral gegenüberliegend von der Anlagefläche (9) bzw. dem Anlageflansch (13) abstehen.

5. Kabel-/Leitungseinführung nach Anspruch 4, **dadurch gekennzeichnet, dass** der Befestigungsabschnitt (8) auf seiner Außenseite (15) gegenüberliegend zum jeweiligen Rückhaltewandabschnitt (14) im Wesentlichen ebene Führungsflächen (17) aufweist, wobei insbesondere eine Länge (18) der Führungsfläche (17) größer als eine Länge (19) des zugeordneten Rückhaltewandabschnitts (14) ist.

6. Kabel-/Leitungseinführung Anspruch 5, **dadurch gekennzeichnet, dass** das Steckteil (10) im Wesentlichen U-förmig ausgebildet ist, wobei jeder U-förmige Schenkel (20, 21) zwischen Führungsfläche (17) und entsprechendem Rückhaltewandabschnitt (14) einschiebbar ist, wobei insbesondere jeder U-förmige Schenkel (20, 21) und/oder jeder Zwischenraum (23) zwischen Anlagefläche (9) und dem Flansch (6) keilförmig ausgebildet ist und/oder die U-förmigen Schenkel (20, 21) des Steckteils (10) sich keilförmig zumindest abschnittsweise vom freien Ende (24) in Richtung U-Steg (22) in Längsrichtung der Einführhülse (5) verbreitern und/oder
der U-Steg (22) im aufgesteckten Zustand eine vom Anlageflansch (13) fortweisende Anschlagleiste (26) aufweist, wobei insbesondere der U-Steg (22) oder die Anschlagleiste (26) mit einem Erdungskontaktanschluss (27) ausgebildet ist.

7. Kabel-/Leitungseinführung nach einem der vorangehenden Ansprüche, **dadurch gekennzeichnet, dass** der Anpressflansch (6) zumindest eine in Richtung Öffnungsrand (11) offene Dichtnut (28) aufweist.

8. Kabel-/Leitungseinführung nach einem der vorangehenden Ansprüche, **dadurch gekennzeichnet, dass** das Klemmteil (7) als auf die Einführhülse (5) insbesondere aufschraubbare Mutter (29) ausgebildet ist, welche insbesondere eine Hutmutter (30) ist und in dieser eine insbesondere verformbare Leitungsdichthülse (31) anordbar ist und insbesondere
die Leitungsdichthülse (31) bei aufgeschraubter Hutmutter (30) mit ihrem Innenende (32) mit einer Stirnseite (33) der Einführhülse (5) in Anlage ist.

9. Kabel-/Leitungseinführung nach einem der vorangehenden Ansprüche, **dadurch gekennzeichnet, dass** die Einführhülse (5) einen radial- nach außen vorstehenden und insbesondere einteilig mit dem Anpressflansch (6) ausgebildeten Schraubflansch (34) aufweist.

10. Kabel-/Leitungseinführung nach einem der vorangehenden Ansprüche, **dadurch gekennzeichnet, dass** das Steckteil (10) auf seiner dem Anpressflansch (6) zuweisenden Seite eine Kontaktfläche (35) zur Anlage an die Gehäusewand (4) aufweist.

11. Kabel-/Leitungseinführung nach einem der vorangehenden Ansprüche, **dadurch gekennzeichnet, dass** das Steckteil (10) insbesondere in seinem U-Steg (22) wenigstens eine Steckbohrung (36) zum Einstecken eines Sicherungsstiftes (37) aufweist, welche Steckbohrung (36) bei aufgestecktem Steckteil (10) mit einer Einsteckbohrung (38) in der Gehäusewand (4) bzw. im Öffnungsrand (11) fluchtet.

12. Kabel-/Leitungseinführung nach einem der vorangehenden Ansprüche, **dadurch gekennzeichnet, dass** diese eine Ex- insbesondere Ex-d bzw. Ex-e-Kabel-/Leitungseinführung ist.

13. Kabel-/Leitungseinführung nach einem der vorangehenden Ansprüche, **dadurch gekennzeichnet, dass** das Steckteil (10) für zwei oder mehr Kabel-/Leitungseinführung (1) einsetzbar ist und zwischen Anlagefläche (9) und Gehäusewand (4) bei dieser Mehrzahl von Kabel-/Leitungseinführungen mit seinen U-Schenkeln (20, 21) einschiebbar ist.

14. Kabel-/Leitungseinführung nach einem der vorangehenden Ansprüche, **dadurch gekennzeichnet, dass** Klemmteil (7), Leitungsdichthülse (31), und Einführhülse (5) aus wenigstens zwei im Wesentlichen in Axialrichtung der Kabel-/Leitungseinführung (1) geteilten Einzelelementen zusammensetzbar sind und entlang entsprechender Trennkanten der Einzelelemente zu deren positionsgenauem Zusammensetzen Führungs- und/oder Positioniermittel angeordnet sind.

15. Kabel-/Leitungseinführung nach Anspruch 14, **dadurch gekennzeichnet, dass** die Kabel-/Leitungseinführung in explosionsgefährdeten Bereichen einsetzbar ist und die Führungs- und/oder Positioniermittel an gegenüberliegenden Trennkanten der Einzelelemente als miteinander verrastende Führungs- und/oder Positioniermittel ausgebildet sind, wobei solche Führungs- und/oder Positioniermittel insbesondere als Rasthaken und/oder Raststifte und/oder Rast- und/oder Einsteckzungen oder dergleichen mit entsprechenden Gegenelementen in Form von Einrast- und/oder Einstecköffnungen ausgebildet sind.

## Claims

1. A cable gland (1) for inserting and passing at least one cable (2) into and through a wall opening (3) in a housing wall (4) with an insertion sleeve (5) for plugging into the wall opening (3), a pressure flange (6) projecting substantially radially outwards therefrom at least in places, a clamping part (7) that can be screwed in particular onto a first end of the insertion sleeve (5) in the direction of the pressure flange (6), and a fastening section (8) of the insertion sleeve (5) arranged on an end opposite the clamping part (7), wherein the fastening section (8) has an abutment surface (9) projecting substantially radially outwards at least in places, **characterized by** a plug-in part (10), wherein the abutment surface (9) can be engaged with from behind by radially inserting the plug-in part (10) on a housing wall side in such a way that the pressure flange (6) is pressed against an opening edge (11) of the wall opening (3) on a housing wall rear side.

2. Cable gland according to Claim 1, **characterized in that** the abutment surface (9) is designed as an abutment flange (13) running all the way around in the circumferential direction (12) of the fastening section (8).

3. Cable gland according to Claims 1 or 2, **characterized in that** the abutment surface (9) has at least one retaining wall section (14) which faces in the direction of the pressure flange (6) and extends at a distance from the outer side (15) of the fastening section.

4. Cable gland according to Claim 3, **characterized in that** two retaining wall sections (16) project, substantially diametrically opposite the abutment surface (9) or the abutment flange (13).

5. Cable gland according to Claim 4, **characterized in that** the fastening section (8) has on its outer side (15) opposite the respective retaining wall section (14) substantially planar guide surfaces (17), wherein in particular a length (18) of the guide surface (17) is greater than a length (19) of the associated retaining wall section (14).

6. Cable gland Claim 5, **characterized in that** the plug-in part (10) is substantially U-shaped, wherein each U-shaped leg (20, 21) can be inserted between the guide surface (17) and the corresponding retaining wall section (14), wherein in particular each U-shaped leg (20, 21) and/or each intermediate space (23) between the abutment surface (9) and the flange (6) is wedge-shaped and/or the U-shaped legs (20, 21) of the plug-in part (10) widen in a wedge-shaped manner at least in sections from the free end (24) in the direction of the U-bridge (22) in the longitudinal direction of the insertion sleeve (5) and/or the U-bridge (22) in the plugged-on state has a stop fillet (26) pointing away from the abutment flange (13), wherein in particular the U-bridge (22) or the stop fillet (26) is designed with a ground contact terminal (27).

7. Cable gland according to any one of the preceding claims, **characterized in that** the pressure flange (6) has at least one sealing groove (28) which is open in the direction of the opening edge (11).

8. Cable gland according to any one of the preceding claims, **characterized in that** the clamping part (7) is designed as a nut (29) that can be screwed in particular onto the insertion sleeve (5) and is in particular a cap nut (30), and an in particular deformable cable sealing sleeve (31) can be arranged in it and in particular the inner end (32) of the cable sealing sleeve (31) is in abutment with an end face (33) of the insertion sleeve (5) when the cap nut (30) is screwed on.

9. Cable gland according to any one of the preceding claims, **characterized in that** the insertion sleeve (5) has a screw flange (34) projecting radially outwardly and designed in particular integrally with the pressure flange (6).

10. Cable gland according to any one of the preceding claims, **characterized in that** the plug-in part (10) has on its side facing the pressure flange (6) a contact surface (35) for abutting the housing wall (4).

11. Cable gland according to any one of the preceding claims, **characterized in that** the plug-in part (10) has in particular in its U-bridge (22) at least one plug hole (36) for plugging in a securing pin (37), which plug hole (36) is aligned with a plug-in hole (38) in the housing wall (4) or in the opening edge (11) when the plug-in part (10) is plugged on.

12. Cable gland according to any one of the preceding claims, **characterized in that** it is an Ex, in particular an Ex-d or Ex-e, cable gland.

13. Cable gland according to any one of the preceding claims, **characterized in that** the plug-in part (10) can be used for two or more cable glands (1) and, in the case of this plurality of cable glands, can be inserted with its U-legs (20, 21) between the abutment surface (9) and the housing wall (4).

14. Cable gland according to any one of the preceding claims, **characterized in that** the clamping part (7), cable sealing sleeve (31), and insertion sleeve (5) can be assembled from at least two individual elements divided substantially in the axial direction of the cable gland (1), and guiding and/or positioning means are arranged along corresponding separation edges of the individual elements for their positionally accurate assembly.

15. Cable gland according to Claim 14, **characterized in that** the cable gland can be used in areas at risk of explosion, and the guiding and/or positioning means on opposite separation edges of the individual elements are designed as interlatching guiding and/or positioning means, wherein such guiding and/or positioning means are designed in particular as latching hooks and/or latching pins and/or latching and/or plug-in tongues or the like with corresponding counter-elements in the form of latching and/or plug-in openings.

## Revendications

1. Passage de ligne/câble (1) pour l'introduction et le passage d'au moins une ligne (2) dans et à travers une ouverture de paroi (3) dans une paroi de boîtier (4) comprenant une douille d'introduction (5) pour insertion dans l'ouverture de paroi (3), une collerette de pression (6) faisant essentiellement saillie radialement vers l'extérieur au moins partiellement à partir de celui-ci, une pièce de serrage (7) pouvant être vissée sur une première extrémité de la douille d'introduction (5) en direction de la collerette de pression (6) et un secteur de fixation (8) de la douille d'introduction (5) disposée à une extrémité opposée à la pièce de serrage (7), la section de fixation (8) présentant une surface d'appui (9) faisant saillie au moins partiellement essentiellement radialement vers l'extérieur, **caractérisé par** une pièce enfichée (10), la surface d'appui (9) pouvant être engagée par l'arrière, par l'insertion radiale de la pièce enfichée (10) dans un côté de paroi de boîtier, de telle façon que la collerette de pression (6) soit pressée sur un bord d'ouverture (11) de l'ouverture de paroi (3) sur une face arrière de boîtier.

2. Passage de ligne/câble selon la revendication 1, **caractérisé en ce que** la surface d'appui (9) est réalisée sous la forme d'une collerette de pression (13) s'étendant complètement dans la direction périphérique (12) du secteur de fixation (8).

3. Passage de ligne/câble selon la revendication 1 ou 2, **caractérisé en ce que** la surface d'appui (9) présente au moins un secteur de paroi de retenue (14) pointant dans la direction de la collerette de pression (6), lequel s'étend espacé vers la face extérieure (15) du secteur de fixation.

4. Passage de ligne/câble selon la revendication 3, **caractérisé en ce que** deux secteurs de paroi de retenue (16) font saillie essentiellement diamétralement opposés à la surface d'appui (9) ou de la collerette d'appui (13).

5. Passage de ligne/câble selon la revendication 4, **caractérisé en ce que** le secteur de fixation (8) présente sur sa face extérieure (15), à l'opposé du secteur de paroi de retenue (14) correspondant, des surfaces de guidage (17) essentiellement planes, en particulier une longueur (18) de la surface de guidage (17) étant supérieure à une longueur (19) du secteur de paroi de retenue (14) associée.

6. Passage de ligne/câble selon la revendication 5, **caractérisé en ce que** la pièce enfichée (10) est réalisée essentiellement en forme d'U, chaque branche en forme d'U (20, 21) pouvant être insérée entre la surface de guidage (17) et la section de paroi de retenue (14) correspondante, en particulier chaque branche en forme d'U (20, 21) et/ou chaque espace intermédiaire (23) formé entre la surface d'appui (9) et la collerette (6) étant réalisé en forme de coin et/ou les branches en forme d'U (20, 21) de la pièce enfichée (10) s'élargissant en forme de coin au moins par sections de l'extrémité libre (24) en direction de la barrette en U (22) dans la direction longitudinale de la douille d'introduction (5) et/ou la barrette en U (22) présentant à l'état enfiché une barre de butée (26) pointant dans la direction opposée à la collerette de d'appui (13), en particulier la barrette en U (22) ou la barre de butée (26) étant réalisée avec une borne de mise à la terre (27).

7. Passage de ligne/câble selon l'une quelconque des revendications précédentes, **caractérisé en ce que** la collerette de pression (6) présente une gorge d'étanchéité (28) ouverte en direction du bord fin (11).

8. Passage de ligne/câble selon l'une quelconque des revendications précédentes, **caractérisé en ce que** la pièce de serrage (7) est réalisée sous la forme d'un écrou (29) en particulier pouvant être vissée sur la douille d'introduction (5), lequel est en particulier un écrou borgne (30) et dans lequel une douille d'étanchéité de câble (31) en particulier déformable peut être disposée et en particulier lorsque la douille d'étanchéité de câble (31) est en contact par son extrémité intérieure (32) avec une face frontale (33) de la douille d'introduction (5) lorsque l'écrou borgne (30) est vissé.

9. Passage de ligne/câble selon l'une quelconque des revendications précédentes, **caractérisé en ce que** la douille d'introduction (5) présente une collerette à vis (34) faisant saillie vers l'extérieur et en particulier réalisée d'une pièce avec la collerette de pression (6).

10. Passage de ligne/câble selon l'une quelconque des revendications précédentes, **caractérisé en ce que** la pièce enfichée (10) présente sur sa face faisant face à la collerette de pression (6) une surface de contact (35) pour la mise en contact avec la paroi de boîtier (4).

11. Passage de ligne/câble selon l'une quelconque des revendications précédentes, **caractérisé en ce que** la pièce enfichée (10) présente en particulier dans sa barrette en U (22) au moins un alésage d'insertion (36) pour l'insertion d'une goupille de sécurité (37), lequel alésage d'insertion (36) affleure, lorsque la pièce enfichée (10) est enfichée, un alésage d'insertion (38) dans la paroi de boîtier (4) ou dans le bord d'ouverture (11).

12. Passage de ligne/câble selon l'une quelconque des revendications précédentes, **caractérisé en ce que** celle-ci est un passage de ligne/câble Ex, en particulier Ex-d ou Ex-e.

13. Passage de ligne/câble selon l'une quelconque des revendications précédentes, **caractérisé en ce que** la pièce enfichée (10) peut être utilisée pour deux ou plusieurs passages de ligne/câble (1) et que, dans le cas d'une telle pluralité de passages de ligne/câble, peut être inséré avec ses branches en U (20, 21) entre la surface d'appui (9) et la paroi de boîtier (4).

14. Passage de ligne/câble selon l'une quelconque des revendications précédentes, **caractérisé en ce que** la pièce de serrage (7), la douille d'étanchéité de câble (31) et la douille d'introduction (5) peuvent être assemblés à partir d'au moins deux éléments individuels divisés essentiellement dans la direction axiale du passage de ligne/câble (1) et des moyens de guidage et/ou de positionnement sont disposés le long d'arêtes de séparation correspondantes des éléments individuels pour leur assemblage avec un positionnement précis.

15. Passage de ligne/câble selon la revendication 14, **caractérisé en ce que** le passage de ligne/câble peut être utilisé dans des atmosphères à potentiel d'explosion et les moyens de guidage et/ou de positionnement sont réalisés sur des arêtes de séparation des éléments individuels comme des moyens de guidage et/ou de positionnement qui s'engagent l'un dans l'autre, de tels moyens de guidage et/ou de positionnement étant formés en particulier en tant que crochets d'encliquetage et/ou tiges d'encliquetage et/ou languettes d'enclenchement et/ou languettes d'insertion ou similaires avec des contre-éléments correspondants sous la forme d'ouvertures d'encliquetage et/ou d'insertion.
